# EUROPÄISCHE PATENTANMELDUNG

(11) **EP 1 801 430 A2**
(43) Veröffentlichungstag der Anmeldung: **27.06.2007**
(21) Anmeldenummer: 06026150.0
(22) Anmeldetag: 18.12.2006
(51) Int. Cl.: F16B 13/12

(54) **Schlagdübel**

(30) Priorität: 22.12.2005 DE 202005020063 U
(71) Anmelder: Berner GmbH, 74653 Künzelsau (DE)
(72) Erfinder: Runge, Erich, 74653 Künzelsau (DE)
(74) Vertreter: Sties, Jochen

(57) **Zusammenfassung**

Ein Schlagdübel bestehend aus einem Dübel (10) und einem Spreiznagel (1), ist dadurch gekennzeichnet, daß der Dübel (10) ein Hohlraumdübel und der Spreiznagel ein Schraubnagel (1) ist.

## Beschreibung

Die Erfindung betrifft einen Schlagdübel bestehend aus einem Dübel und einem Spreiznagel.

Schlagdübel sind in verschiedenen Ausführungsformen bekannt. Sie dienen dazu, mit geringem Aufwand beispielweise einen Kabelkanal oder eine Holz-Unterkonstruktion an einem Untergrund zu befestigen. Der Dübel wird mit dem vormontierten Spreiznagel durch eine Öffnung in dem zu befestigenden Element hindurch in ein vorher ausgebildetes Bohrloch eingesteckt, und der Spreiznagel wird mittels eines Hammers in den Dübel hineingeschlagen. Dadurch wird zuerst der Dübel vollständig in das Bohrloch eingetrieben, bis schließlich der Spreiznagel den Widerstand überwindet, der ihm vom Dübel entgegengesetzt wird, und er selbst in den Dübel eingetrieben wird. Dabei wird der vordere Abschnitt des Dübel gespreizt, wodurch der Dübel und damit das von ihm gehaltene Element zuverlässig am Untergrund verankert ist.

Nachteilig bei den bekannten Spreizdübeln ist, daß nach dem Einschlagen des Spreiznagels nicht kontrolliert werden kann, ob der Dübel tatsächlich im Untergrund verankert ist oder nur lose im Bohrloch steckt. Falls das Bohrloch beispielsweise einen Hohlraum im Untergrund schneidet, kann es passieren, daß das Bohrloch dem gespreizten vorderen Abschnitt des Dübels keinen Widerstand entgegensetzt. Der Dübel kann dann mit geringer Kraft mindestens teilweise aus dem Bohrloch herausgezogen werden. Außerdem kann es vorkommen, daß der Spreiznagel, wenn er in den Dübel eingeschlagen wird, so hohe Reibungskräfte auf den vorderen Abschnitt des Dübels überträgt, daß dieser vom hinteren Abschnitt des Dübels abgerissen wird. Auch in diesem Fall ist die Haltekraft des Dübels sehr begrenzt.

Die Aufgabe der Erfindung besteht darin, einen Dübel der eingangs genannten Art dahingehend weiterzubilden, daß nach der Anbringung des Dübels kontrolliert werden kann, ob die gewünschten Auszugskräfte erreicht werden.

Zur Lösung dieser Aufgabe ist erfindungsgemäß vorgesehen, daß der Dübel ein Hohlraumdübel und der Spreiznagel ein Schraubnagel ist. Der Schraubnagel dient nach wie vor dazu, den Dübel in seinem vorderen Bereich zu spreizen. Da der Dübel jedoch ein Hohlraumdübel ist, ist er an der Spitze mit einem geschlossenen Ring ausgeführt, der als Gewinde-Widerlager für den Schraubnagel dient. Wenn der Schraubnagel, nachdem er in den Dübel eingeschlagen wurde, mittels eines Schraubendrehers gedreht wird, schraubt sich seine Spitze in den in Umfangsrichtung geschlossenen Ring am Vorderende des Dübels ein und versucht, diesen zum hinteren Ende des Dübels zu ziehen, wodurch der vordere Abschnitt des Dübels aufgeweitet wird. Wenn der Dübel stramm im Bohrloch sitzt, kann der Schraubnagel nur sehr schwer weiter in den Dübel eingeschraubt werden, da der Dübel nicht nach außen ausweichen kann. Das zum Drehen des Schraubnagels notwendige hohe Drehmoment signalisiert dem Anwender, daß der Dübel vorschriftsmäßig verankert ist. Wenn allerdings das Bohrloch einen Hohlraum getroffen hat, kann der Dübel, wenn der Schraubnagel gedreht wird, leicht nach außen ausweichen. Das dann zum Einschrauben des Schraubnagels notwendige geringe Drehmoment signalisiert dem Anwender, daß der Dübel im eingeschlagenen Zustand voraussichtlich nicht die gewünschten Auszugskräfte erreicht. Der Anwender kann dann den Schraubnagel so weit einschrauben, daß der Hohlraumdübel sich im Bohrloch aufweitet und gegebenenfalls verknotet. Der sich schließlich ergebende Anstieg des zum Drehen des Schraubnagels notwendigen Drehmoments signalisiert dem Anwender, daß die gewünschte Auszugskraft nun doch gegeben ist. Wenn der Dübel beim Einschlagen des Schraubnagels zerstört wurde, weil sein vorderes Ende vom hinteren Ende abgerissen wurde, kann der Schraubnagel mit vergleichsweise geringem Drehmoment gedreht werden. Da sich auch bei längerem "Einschrauben" des Schraubnagels hieran nichts ändert, wird dem Benutzer signalisiert, daß besser ein neuer Dübel gesetzt werden sollte.

Vorteilhafte Ausgestaltungen der Erfindung ergeben sich aus den Unteransprüchen.

Die Erfindung wird nachfolgend anhand verschiedener Ausführungsformen beschrieben, die in den beigefügten Zeichnungen dargestellt sind. In diesen zeigen:
- Figur 1 einen schematischen Querschnitt durch einen Schlagdübel gemäß einer ersten Ausführungsform;
- Figur 2 eine perspektivische Ansicht des Dübels von Figur 1;
- Figur 3 eine Seitenansicht eines Dübels gemäß einer zweiten Ausführungsform;
- Figur 4 einen ersten Schnitt durch den Dübel von Figur 3;
- Figur 5 einen zweiten Schnitt durch den Dübel von Figur 3;
- Figur 6 einen Schnitt entlang der Ebene VI-VI von Figur 3;
- Figur 7 in vergrößertem Maßstab einen Schnitt durch das hintere Ende des Dübels von Figur 3;
- Figur 8 einen Schnitt durch das hintere Ende eines Dübels gemäß einer Ausführungsvariante; und
- Figur 9 einen Schnitt durch das hintere Ende einer weiteren Ausführungsvariante.

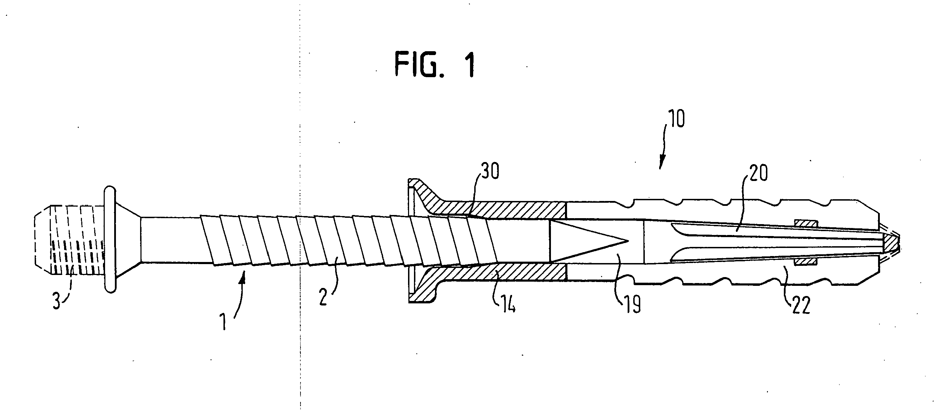

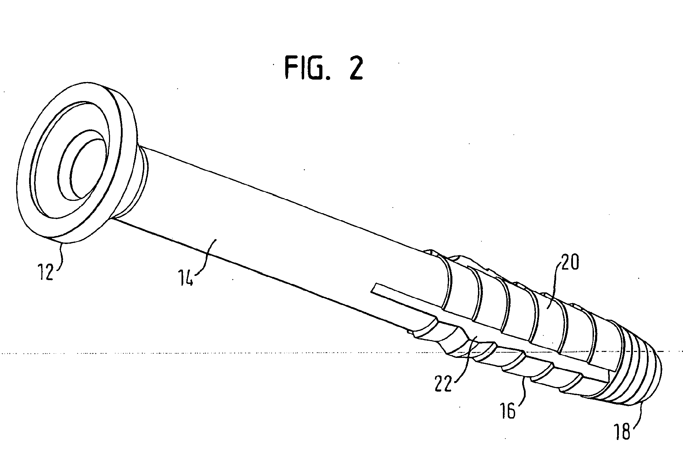

In den Figuren 1 und 2 ist ein Schlagdübel gezeigt, der aus einem Schraubnagel 1 und einem Dübel 10 besteht. Der Schraubnagel ist entlang seinem Schaft mit einem Sägezahngewinde 2 versehen und weist an seinem hinteren Ende eine Antriebsausgestaltung auf, beispielsweise einen Kreuzschlitz oder eine Torx-Ausnehmung. Es ist auch möglich, am hinteren Ende des Schraubnagels 1 einen kurzen Gewindebolzen 3 vorzusehen.

Der Dübel 10 weist ein hinteres Ende 12, einen hinteren Abschnitt 14, einen vorderen Abschnitt 16 und ein vorderes Ende 18 auf. Das hintere Ende 12 ist bei der Ausführungsform der Figuren 1 bis 6 als sich konisch erweiternder Teller ausgeführt, in welchem der Kopf des Schraubnagels 1 versenkt werden kann. Der hintere Abschnitt 14 des Schraubnagels ist als hülsenförmiger, in Umfangsrichtung geschlossener Schaft ausgeführt, der innen hohl ist, so daß ein Schraubnagelkanal 19 mit im wesentlichen kreisförmigem Querschnitt ausgebildet ist. Der Durchmesser des Schraubnagelkanals 19 verringert sich abrupt an einer Stufe 30, so daß ein Widerlager für den Schraubnagel 1 gebildet ist.

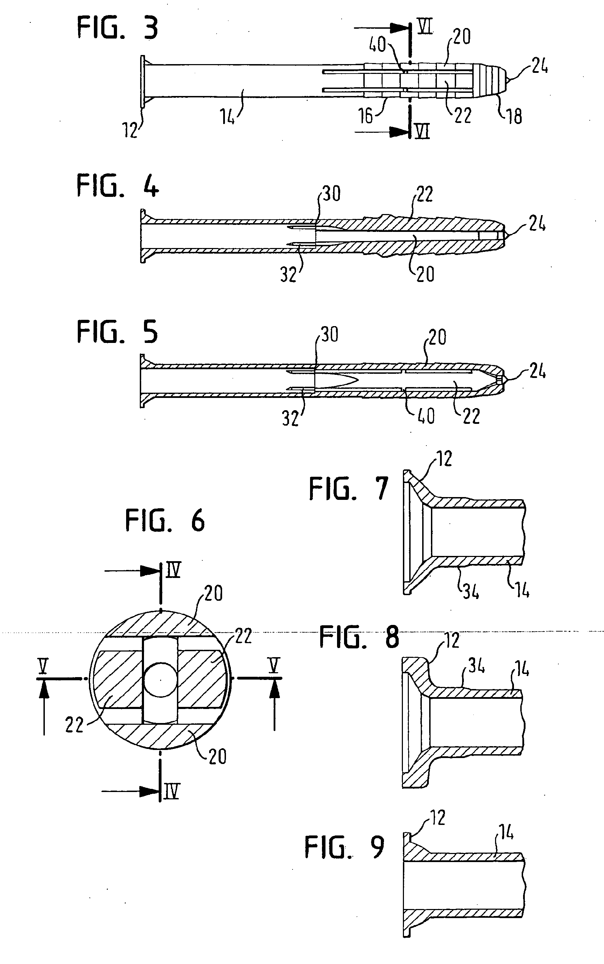

Der vordere Abschnitt 14 des Dübels 10 ist gebildet durch vier Stege 20, 22, die einander paarweise gegenüberliegen. Zwischen benachbarten Stegen sind Schlitze gebildet, die jedoch nicht radial verlaufen, sondern seitlich versetzt (siehe Figur 6), so daß die Aussparungen zusammen mit dem hohlen Innenraum H-förmig verlaufen. Die Stege 20 haben eine geringere Dicke als die Stege 22 und sind auf ihrer Außenseite annähernd eben ausgeführt. Es ist lediglich ein flaches Sägezahnprofil vorgesehen. Die dickeren Stege 22 weisen auf ihrer Außenfläche mehrere stärker ausgeprägte Zähne auf. Zur Stabilisierung können zwischen benachbarten Stegen 20, 22 kleine Verbindungslaschen vorgesehen sein, die einstückig aus dem Material des Dübels ausgebildet sind.

Der vordere Abschnitt 18 ist als in Umfangsrichtung geschlossener Ring ausgeführt, der als Widerlager für das Gewinde 2 des Schraubnagels dienen kann. Am vorderen Ende 18 des Dübels ist eine Spitze 24 vorgesehen, die es dem Dübel erleichtert, eine Kunststoffolie oder ähnliches zu durchstoßen.

Im Ausgangszustand ist der Schraubnagel 1 soweit in den hinteren Abschnitt 14 des Dübels 10 eingeschoben, daß sein Gewinde 2 an der Stufe 30 ansteht. In diesem Zustand kann der Dübel durch einen Hammerschlag auf das hintere Ende des Schraubnagels in ein Bohrloch eingebracht werden. Die Stufe 30 setzt dem Eindringen des Schraubnagels 1 einen so großen Widerstand entgegen, daß der Dübel zunächst vollständig in das Bohrloch eingeschlagen wird, bevor sich der Schraubnagel relativ zum Dübel verschiebt. Wenn der Schraubnagel in den Dübel eingeschlagen wird, spreizt er die Stege 20, 22 nach außen, so daß diese fest gegen die Wandung des Bohrlochs gedrückt werden. Die dünneren Stege 20 diesen zur Erzielung einer hohen Flächepressung in einem harten Material, während die Stege 22 mit ihren Zähnen dazu dienen, den Dübel formschlüssig im Bohrloch zu verankern.

Ein wesentliches Merkmal ist, daß das vordere Ende 18 des Dübels als in Umfangsrichtung geschlossener Ring ausgebildet ist. Der Schraubnagel wird so weit in diesen Ring eingeschlagen, daß sein Gewinde 2 innerhalb des Rings liegt. Wenn der Schraubnagel 1, nachdem er vollständig in den Dübel 10 eingeschlagen wurde, in Einschraubrichtung gedreht wird, wird das vordere Ende 18 des Dübels in Richtung zum hinteren Ende gezogen. Dadurch werden die Stege 20, 22, wenn der Dübel fest in einem Bohrloch sitzt, noch fester gegen die Wandung gedrückt, was den Halt des Dübels verbessert. Falls sich die Stege 20, 22 im Bereich eines Hohlraums befinden, können die Stege 20, 22 in gleicher Weise wie bei einem Hohlraumdübel mittels des Schraubnagels 1 aufgespreizt werden, bis sich schließlich eine fester Halt des Dübels ergibt.

Die Ausführungsform gemäß den Figuren 3 bis 6 unterscheidet sich von der ersten Ausführungsform dadurch, daß im Bereich der Stufe zusätzliche Rippen 32 vorgesehen sind. Diese Erhöhen den Widerstand, welcher dem Schraubnagel beim Einschlagen entgegengesetzt wird, und verhindern gleichzeitig, daß sich der vordere Abschnitt 16 des Dübels beim Einschlagen des Schraubnagels vom hinteren Abschnitt löst.

Bei der zweiten Ausführungsform ist in Figur 6 gut der H-förmige Querschnitt des Schraubnagelkanals 19 zu erkennen. In den Figuren 3 und 5 sind die Verbindungslaschen (gekennzeichnet mit dem Bezugszeichen 40) zu erkennen, die zwischen benachbarten Stegen 20, 22 ausgebildet sind.

In Figur 7 ist zu sehen, daß der Dübel am Übergang vom dem hinteren Abschnitt 14 zum Teller am hinteren Ende 12 des Dübels eine größere Wandstärke 34 aufweist. Der sich dadurch ergebende größere Außendurchmesser sorgt für eine verbesserten Zentrierung des Dübels im Bohrloch. Die vergrößere Wandstärke 34 verhindert auch ein Abreißen des Tellers am hinteren Endes 12 des Dübels vom hinteren Abschnitt 14.

In Figur 8 ist eine Ausführungsvariante gezeigt. Im Unterschied zu Figur 7, bei der ein Doppel-Senkkopf sowohl für den Dübel als auch für den Schraubnagel vorgesehen ist, ist bei der Ausführungsvariante von Figur 8 nur ein Versenken des Kopfes des Schraubnagels 1 vorgesehen. Der Dübel selbst liegt mit einer ebenen Fläche an dem vom ihm zu befestigten Werkstück an.

In Figur 9 ist eine weitere Ausführungsvariante gezeigt. Bei dieser ist keine Aufnahme für den Kopf des Schraubnagels vorgesehen; lediglich das hintere Ende 12 ist so ausgeführt, daß es im Untergrund versenkt werden kann.

## Patentansprüche

1. Schlagdübel bestehend aus einem Dübel (10) und einem Spreiznagel (1), **dadurch gekennzeichnet, daß** der Dübel (10) ein Hohlraumdübel und der Spreiznagel ein Schraubnagel (1) ist.

2. Schlagdübel nach Anspruch 1, **dadurch gekennzeichnet, daß** der Dübel (10) zwischen seinem vorderen Ende und seinem hinteren Ende vier Stege (20, 22) aufweist, die einander paarweise gegenüberliegend angeordnet sind.

3. Schlagdübel nach Anspruch 2, **dadurch gekennzeichnet, daß** ein Paar von Stegen (22) mit einer größeren Dicke ausgeführt sind als die Stege (20) des anderen Paares.

4. Schlagdübel nach Anspruch 2 oder Anspruch 3, **dadurch gekennzeichnet, daß** zwischen den Stegen (20, 22) ein Schraubnagelkanal (19) mit einem H-förmigen Querschnitt gebildet ist.

5. Schlagdübel nach einem der Ansprüche 2 bis 4, **dadurch gekennzeichnet, daß** die dickeren Stege (22) auf ihrer Außenseite mit Sperrzähnen versehen sind.

6. Schlagdübel nach einem der Ansprüche 2 bis 5, **dadurch gekennzeichnet, daß** die dünneren Stege (20) auf ihrer Außenseite im wesentlichen eben sind.

7. Schlagdübel nach Anspruch 6, **dadurch gekennzeichnet, daß** die dünneren Stege (20) auf ihrer Außenseite sehr flache Zähne aufweisen.

8. Schlagdübel nach einem der Ansprüche 2 bis 7, **dadurch gekennzeichnet, daß** zwischen mindestens zwei der Stege (20, 22) eine Verbindungslasche (40) angeordnet ist.

9. Schlagdübel nach einem der vorhergehenden Ansprüche, **dadurch gekennzeichnet, daß** der Dübel (10) an seinem Vorderende eine Spitze (24) aufweist.

10. Schlagdübel nach einem der vorhergehenden Ansprüche, **dadurch gekennzeichnet, daß** sich der Querschnitt des Schraubnagelkanals (19) im Inneren des Dübels zwischen dem hinteren Ende des Dübels (10) und den Stegen (20, 22) verringert.
